# EUROPÄISCHE PATENTANMELDUNG

(11) **EP 0 571 707 A1**
(43) Veröffentlichungstag der Anmeldung: **01.12.1993**
(21) Anmeldenummer: 93101488.0
(22) Anmeldetag: 30.01.1993
(51) Int. Cl.: H01M 2/30, H01M 10/06

(54) **Endpol eines elektrischen Bleiakkumulators**

(30) Priorität: 27.05.1992 DE 4217517
(71) Anmelder: VARTA Batterie Aktiengesellschaft, D-30405 Hannover (DE)
(72) Erfinder: Hülle, Wolfgang, W-5800 Hagen (DE); Neumaier, Alban, W-5983 Balve (DE)
(74) Vertreter: Kaiser, Dieter Ralf, Dipl.-Ing.

(57) **Zusammenfassung**

Gegenüber herkömmlichen Endpolen von Bleiakkumulatoren, die in zweiteiligen Formen gegossen werden und zur Beseitigung der dichtungsschädlichen Trennaht nachbearbeitet werden müssen, ist ein neuer Endpol (1) mit einer Einlage (2) aus einem härteren Metall als Blei durch Fließpressen hergestellt. Dabei wird zunächst durch einen Preßstempel Blei aus dem Kern eines Bleiprofils verdrängt und in das entstandene Sackloch die fließgepreßte Einlage (2), die eine zweigeteilte gewindeartige Profilierung mit in der Höhe versetzten Gewindegängen (2a, 2b) sowie eine Bohrung (5) mit Innengewinde zum Befestigen eines Kabelanschlusses aufweist, eingelegt, In einem folgenden Preßvorgang, bei dem sich die Poleinlage im unteren Teil der Preßform befindet, wird diese mit dem Blei des Polschaftes (3) verpreßt und ein über die Form hinausstehender Teil desselben zum Polfuß (4) gestaucht.

## Beschreibung

Gegenstand der Erfindung ist ein Endpol eines elektrischen Bleiakkumulators, der eine Poleinlage aus einem härteren Metall als Blei besitzt, an welchen elektrische Kabelverbinder anschließbar sind.

Zum Verbinden der Einzelzellen von Bleiakkumulatoren sind Verbinder im mannigfachen Ausführungsformen in Gebrauch. Schweißverbinder ergeben zwar eine wartungsfreie aber dafür starre und montage-unfreundliche Verbindung, Schraubverbinder an Bleipolen haben wegen der Duktilität des Bleis den Nachteil, daß sie regelmäßig nachgezogen werden müssen und nicht wartungsfrei sind. Aus diesem Grund werden hülsenförmige Einlagen in die Pole eingelassen, die mit ihrem Ende über den Pol hinausragen, ein Innengewinde besitzen und aus einem Metall bestehen, das härter ist als Blei, beispielsweise Kupfer oder Messing. Durch Einschrauben einer Schraube in die Poleinlage wird ein fester Kontakt zum Verbinder hergestellt, der mit Rücksicht auf eine gute elektrische Leitfähigkeit ebenfalls aus Kupfer oder Aluminium besteht. Ausserhalb des unmittelbaren Kontaktbereichs mit der Poleinlage besitzt der Verbinder ebenso wie die Befestigungsschraube eine Kunststoffisolation.

Diese Poleinlagen werden im allgemeinen mit dem Blei des Endpols umgossen, sie besitzen häufig die Form eines Vierkants oder eines Sechskants oder sind mit umlaufenden Nuten versehen, um eine Verdrehsicherheit der Einlage gegenüber dem umgebenden Bleimaterial zu gewährleisten.

Derartige gegossene Bleipole werden in einer zweiteiligen Form hergestellt, sodaß eine Trennnaht an den Formhälften nicht vermeidbar ist. Diese Trennaht muß später entfernt werden, da sie im Bereich der Poldurchführung zu Undichtigkeiten führen kann. Um eine einwandfreie Abdichtung der Durchführung des Endpols durch den aus Kunststoff bestehenden Zellendeckel zu erzielen, ist oft eine Nachbearbeitung der äußeren Oberfläche des Poles bei gegossenen Polen notwendig.

Der Erfindung liegt die Aufgabe zugrunde, einen Endpol anzugeben, dessen Einlage optimal mit dem Bleimaterial des Endpols elektrisch und mechanisch verbunden ist und der nach seiner Herstellung keiner weiteren Nachbearbeitung durch spanabhebende Formgebung bedarf, da er eine mechanisch glatte Oberfläche besitzt.

Diese Aufgabe wird durch die in Anspruch 1 angegebenen Maßnahmen gelöst. In den Unteransprüchen sind vorteilhafte Ausgestaltungen des erfindungsgemäßen Endpols angeführt sowie ein Verfahren zur Herstellung des erfindungsgemäßen Endpols angegeben.

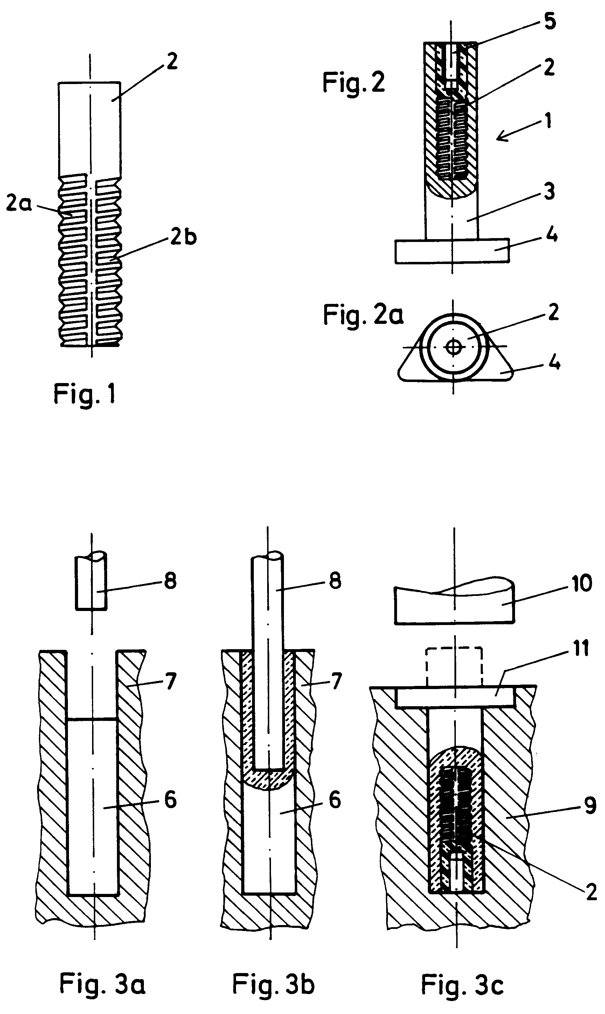

Im folgenden ist der Gegenstand der Erfindung anhand der Figuren 1 bis 3 näher erläutert:
Figur 1 zeigt eine erfindungsgemäße Poleinlage
Figur 2 zeigt den fertigen Endpol
Figur 2a stellt eine Draufsicht auf den Endpol der Figur 2 dar
Figuren 3a-c verdeutlichen das Verfahren zur Herstellung des erfindungsgemäßen Endpols
Gemäß Figur 1 ist eine Endpoleinlage 2 vorgesehen, die aus einem härteren Metall als Blei, insbesondere aus Messing oder Kupfer, besteht und die im Fließpressverfahren hergestellt ist. Ihre äußere Oberfläche ist zumindest teilweise mit einer gewindeartigen Profilierung versehen. Dieses Gewinde ist zumindest zweigeteilt und die Gewindegänge sind in der Höhe gegeneinander versetzt. In Figur 1 ist das Gewinde zweigeteilt und die Gewindeteile 2a und 2b sind um eine halbe Gewindesteigung gegeneinander versetzt.

In Figur 2 ist der fertige Endpol 1 dargestellt. Er enthält die Endpoleinlage 2 , die in den aus Blei bestehenden Endpol eingelassen ist. Der Endpol 1 besitzt einen ebenfalls aus Blei bestehenden Endpolfuß 4 und einen Endpolschaft 3 . In der Poleinlage 2 ist eine Bohrung 5 mit Innengewinde vorgesehen, die zum Befestigen des Kabelanschlusses dient.

Zur Herstellung des erfindungsgemäßen Endpols dient die in Figur 3 schematisch dargestellte Vorrichtung. In eine Pressform 7 (Figur 3a) wird ein Stück Bleiprofil 6 eingelegt; der Stempel 8 einer Presse fährt von oben in die Pressform 7 und verdrängt im Kern des Bleiprofiles 6 das Blei, sodaß ein Sackloch entsteht. Bei diesem Vorgang wird soviel Blei verdrängt, daß die Bohrung in der Pressform 7 gerade ausgefüllt wird. Dies ist aus Figur 3b ersichtlich.

Danach wird in das so entstandene Sackloch die Poleinlage 2 gelegt, und das Bleiprofil 6 mit Poleinlage 2 wird in eine weitere Pressform 9 eingelegt. Diese Pressform besitzt an ihrem oberen Ende eine eingearbeitete Kontur 11 für den Polfuß 4 . Die Poleinlage 2 liegt dabei im unteren Teil der Form und ein Teil des Bleiprofils 6 ragt aus der Form heraus, und zwar um den Volumenanteil, der zum Formen des Polfusses 4 benötigt wird. Der Stempel 10 der Presse fährt hinunter, verformt das überstehende Blei zum Polfuß 4 und verpresst gleichzeitig die lose eingelegte Poleinlage 2 mit dem Blei. Dadurch wird ein guter elektrischer Übergang zwischen Pol und Poleinlage und eine optimale mechanische Einbindung der Poleinlage in den Pol erreicht.

Da der gesamte Endpol in einem Fließpressverfahren hergestellt ist, besitzt er eine glatte Oberfläche und muß nicht mehr weiter bearbeitet werden und ermöglicht die Herstellung einer dichten Durchführung des Endpols durch den aus Kunststoff bestehenden Zellendeckel der Batterie.

## Patentansprüche

1. Endpol eines elektrischen Bleiakkumulators, der eine Poleinlage aus einem härteren Material als Blei besitzt, an welche elektrische Kabelverbinder anschließbar sind, dadurch gekennzeichnet, daß die Poleinlage (2) eine im Fließpressverfahren hergestellte gewindeartige Profilierung besitzt, wobei das Gewinde zumindest zweigeteilt ist und die Gewindegänge der Gewindeteile (2a,2b) in der Höhe gegeneinander versetzt sind.

2. Endpol nach Anspruch 1, dadurch gekennzeichnet, daß das Gewinde zweigeteilt ist und daß die Gewindeteile (2a,2b) um eine halbe Gewindesteigung gegeneinander versetzt sind.

3. Endpol nach den Ansprüchen 1 und 2, dadurch gekennzeichnet, daß die Poleinlage eine Gewindebohrung (5) besitzt.

4. Endpol nach den Ansprüchen 1 bis 3 dadurch gekennzeichnet daß die Poleinlage aus Kupfer oder Messing besteht.

5. Verfahren zur Herstellung eines Endpols nach einem oder mehreren der Ansprüche 1 bis 4, dadurch gekennzeichnet, daß ein Bleirohling (6) durch Fließpressen mit einem Sackloch versehen wird, daß anschließend eine Poleinlage (2) in das Sackloch eingesetzt wird und die profilierte Poleinlage in einem zweiten Fließpressvorgang mit Blei des Endpols umpreßt wird, wobei die endgültige Form des Endpols ausgeformt wird.

6. Verfahren nach Anpruch 5, dadurch gekennzeichnet, daß beim zweiten Fließpressvorgang an den Endpol ein Polfuß (4) angeformt wird.
